# EUROPÄISCHE PATENTANMELDUNG

(11) **EP 1 352 883 A2**
(43) Veröffentlichungstag der Anmeldung: **15.10.2003**
(21) Anmeldenummer: 03007585.7
(22) Anmeldetag: 02.04.2003
(51) Int. Cl.: C04B 28/02, F28D 20/00

(54) **Nichtmetallischer Werkstoff mit hoher Wärmespeicherfähigkeit für Platten, Ofenkacheln, Formstücke, Sockel- und Simssteine für Kamin- und Ofenverkleidungen**

(30) Priorität: 10.04.2002 DE 10215819
(71) Anmelder: Keramik Institut GmbH, 01662 Meissen (DE)
(72) Erfinder: Grziwa, Matthias, 09603 Grossschirma (DE); Uebel, Joachim Dr., 01689 Niederau (DE)
(74) Vertreter: Creutz, Dieter

(57) **Zusammenfassung**

Die vorliegende Erfindung betrifft einen nichtmetallischen Werkstoff mit hoher Wärmespeicherfähigkeit für Platten, Ofenkacheln, Formstücke, Sockel- und Simssteine für Kamin- und Ofenverkleidungen.

Ein solcher nichtmetallischer Werkstoff findet sich bereits in der Natur als sog. Speckstein.

Mit der Erfindung wurde ein Werkstoff entwickelt, der vergleichbare spezifischen Eigenschaften aufweist, wie die des Naturspecksteins. Dabei wurden die spezifischen Nachteile des Naturproduktes, wie Unregelmäßigkeiten der Materialeigenschaften über den Querschnitt auf Grund von Maserungen, Einschlüssen und Ausbrüchen vermieden und die physikalischen Eigenschaften, wie Festigkeit, spezifische Wärmekapazität und Wärmeleitfähigkeit sowie die Rein- und Rohdichte verbessert.

Der erfindungsgemäße nichtmetallischer Werkstoff besteht aus einem Gemisch von über 50 Gew. % Talkum, Bindemittel sowie wahlweise färbenden und/oder festigkeitssteigernden Zusätzen.

## Beschreibung

Die vorliegende Erfindung betrifft einen nichtmetallischen Werkstoff mit hoher Wärmespeicherfähigkeit für Platten, Ofenkacheln, Formstücke, Sockel- und Simssteine für Kamin- und Ofenverkleidungen.

Ein solcher nichtmetallischer Werkstoff findet sich bereits in der Natur als sog. Speckstein. Während der letzten Jahre konnte ein ständig steigender Bedarf an Speckstein für die Fertigung von kompletten Specksteinöfen, für Verkleidungen von Kaminöfen und als hochwertiger Kachelersatz verzeichnet werden.

Der Speckstein erhält seinen außergewöhnlichen Charakter als Ofenstein durch seine wesentliche Zusammensetzung aus Talk und Magnesit. Die besonderen Eigenschaften wurden schon vor vielen Jahrzehnten in nordischen Ländern genutzt.

Die extrem gute Speichereigenschaft und Wärmeleitfähigkeit prädestinieren den Speckstein wie kein anderes Material als Ofenstein.

Die Zusammensetzungen des natürlichen Specksteins liegen bei ca. 50 - 60 % Talk, ca. 30 - 40 % Magnesit und ca. 10 % Penninit. Talkum besitzt eine einschichtige trikline Struktur und liegt im allgemeinen in Form von blättrigen und schuppigen Ausbildungen vor. Er schwankt zwischen folgenden chemischen Zusammensetzungen: und

| | | |
|---|---|---|
| 3 MgO | 4 SiO₂ | H₂O |
| 31,8% | 63,5% | 4,7% |
| 4 MgO | 5 SiO₂ | H₂O |
| 33,5% | 62,7% | 3,8% |

Diese können noch Verunreinigungen von Aluminium-, Eisen-, Kalk-, Alkaliverbindungen und größeren Wassermengen enthalten. Dichte Talke werden auch Steatit oder Speckstein genannt, wobei der für den Kamin- und Ofenbau verwendete Begriff des natürlichen Specksteins aus seiner sich speckig anfühlenden Oberfläche stammt und vorwiegend aus Talkum und Magnesit besteht.

Magnesit, auch bekannt als Bitterspat, mit der chemischen Zusammensetzung MgCO₃, bewirkt im Zusammensein mit Talkum beim Speckstein höhere Festigkeiten. Die Fähigkeit der besseren Wärmespeicherung hat dem Speckstein trotz höherer Preise eine herausragende Stellung im modernen Ofenund Kaminbau eingeräumt. Mit wachsender Verantwortung des Konsumenten gegenüber den vorhandenen Energieressourcen werden auch in Zukunft solche positiven Aspekte der effektivsten Ausnutzung der erzeugten Wärmemengen immer mehr an Tragkraft gewinnen.

Talkum wird weiterhin zur Erzeugung von Elektrokeramik, in diesem Zusammenhang als Steatitkeramik (Werkstoffgruppe C 220 nach IEC 672) bezeichnet, verwendet. Dabei kommt Talkum im Versatz in der Größenordnung von 80 - 90 Gew. % zum Einsatz. Weiterhin werden Ton und Flussmittel hinzugefügt. Der Ton hat hier die Aufgabe, einerseits als Hilfsmittel zur Verbesserung der Bildsamkeit bei der plastischen Formgebung und andererseits als Bindemittel beim Trockenpressen zu wirken. Diese Massen werden bei Temperaturen zwischen 1300 und 1400°C gebrannt. Dabei kommt es u. a. zur vollständigen Entwässerung des Talkes, zu Phasenumwandlungen im Kristallgefüge, zu Schmelzphasenbildungen und zu einer enormen Festigkeitssteigerung.

Damit erfüllt die Steatitkeramik nicht die für den Einsatz im Kachelofen- und Kaminbau gewünschten Anforderungen an eine sich speckig anfühlende und dem Naturspeckstein nahekommende Oberfläche, die vor allem in der geringen Härte und dem hohen Anteil an chemisch gebundenem Wasser begründet liegt.

Eine weitere Lösung, die sich mit dem Problem der Herstellung von Kacheln aus Tonmasse und Speckstein beschäftigt, findet sich im Gebrauchsmuster DE 298 01 439 U1. Diese Lösung schlägt vor, eine Mischung aus Tonmasse und zerkleinertem bzw. gemahlenem Speckstein, vorzugsweise mit einem Anteil von 10 - 50 Gew. % zur Herstellung von Ofenkacheln zu nutzen.

Nachteil dieser Lösung gegenüber dem erfindungsgemäßen Werkstoff, ist die geringere Wärmespeicherfähigkeit auf Grund niedrigerer Rohdichte der Ofenkachel aus einem Ton- und Talkumgemisch mit einem Anteil von 10 - 50 Gew. % Talkum im Versatz. Weiterhin werden diese Ofenkacheln für eine zweckmäßige Farbgebung, Oberflächenhärte sowie Dichtheit der Kachel glasiert. Das bedeutet im Gegensatz zur erfindungsgemäßen Lösung, daß somit keine für einen natürlichen Speckstein typischen Oberflächen mit dessen speckigen Habitus, der gewünscht geringen Mohshärte sowie der nachträglichen Bearbeitbarkeit möglich sind.

Nachteil des natürlichen Specksteines ist, daß dieser bis heute verarbeitete Speckstein aus Natursteinblöcken geschnitten wird. Der in den meisten Lagerstätten vorkommende Speckstein erreicht selten Blockformate, die ausreichende Abmessungen für die Fertigung von Platten ergeben. In weltweit nur wenigen Lagerstätten kann der gewünschte Rohstoff in Blockformaten abgebaut werden, wodurch eine dürftige Farbvielfalt erreicht wird. Die somit in Handwerk und Handel angebotene Specksteinpalette bezieht sich auf folgende Färbungen, nämlich grau-blau über grau-grünlich bis grau-beige und dunkelgrau bis schwarz marmoriert. Weiterhin ist der enorme logistische Aufwand für einen Transport des geeigneten Naturspecksteins zu den verarbeitenden Märkten nachteilig in Betracht zu ziehen.

Dieser vorliegenden Erfindung liegt die Aufgabe zugrunde, einen Werkstoff mit vergleichbaren spezifischen Eigenschaften, wie sie der Naturspeckstein aufweist, zu schaffen. Dabei sollen die spezifischen Nachteile des Naturproduktes, wie Unregelmäßigkeiten der Materialeigenschaften über den Querschnitt auf Grund von Maserungen, Einschlüssen und Ausbrüchen vermieden werden und die physikalischen Eigenschaften, wie Festigkeit, spezifische Wärmekapazität und Wärmeleitfähigkeit sowie die Rein- und Rohdichte verbessert werden.

Mit der erfindungsgemäßen Lösung wird ein nichtmetallischer Werkstoff mit hoher Wärmespeicherfähigkeit für Platten, Ofenkacheln, Formstücke, Sockelund Simssteine für Kamin- und Ofenverkleidungen beschrieben, der die bekannten Nachteile des Standes der Technik beseitigt, ohne dabei die Vorteile der natürlichen Specksteinprodukte zu verlieren.

Erfindungsgemäß besteht der nichtmetallische Werkstoff aus einem Gemisch von über 50 Gew. % Talkum, Bindemittel sowie wahlweise färbenden und/oder festigkeitssteigernden Zusätzen.

Als Bindemittel kommen Substanzen in beliebig variierenden Masseanteilen zum Einsatz. Diese Bindemittel dienen zur Erzielung von organisch-chemischen, anorganisch-chemischen oder hydraulischen Bindungen. Ebenfalls können wahlweise solche Bindemittel eingesetzt werden, die allein/oder gemeinsam mit anderen Bindemitteln keramische Versinterungen herbeiführen.

Um organisch-chemische Bindungen herzustellen, werden erfindungsgemäß vorzugsweise Zusätze von organischen Bindern, wie Kunstharzen, Zellulosederivaten, Sulfitablaugen und/oder Alginaten verwendet.

Als Bindemittel zur Erzielung anorganisch-chemischer Bindungen werden anorganische Binder, wie Phosphorsäure, Aluminiumphosphat, Alkaliphosphat und/oder Wasserglas eingesetzt.

Hydraulische Bindungen lassen sich mittels Zementen, wie Zemente und Spezialzemente vom Portlandtyp, Eisenportlandzement, Hochofenzement sowie Tonerdezement und/oder Puzzolan- oder Traßzement, herstellen.

Erfindungsgemäß wird eine keramische Versinterung mittels plastischer Rohstoffe, wie Kaolin, in Verbindung mit Flußmitteln, wie Feldspat, insbesondere Natron- und Kalifeldspat, Nephelinsyenit und/oder Oxiden der Alkali- und Erdalkaligruppe sowie Eisen-, Zink- Kupfer-, Bor- und/oder Kobaltoxid erzeugt. Kaolin erhält hier trotz seiner schlechteren Bildsamkeit gegenüber dem Ton den Vorzug, da der Kaolin nur äußerst gering mit färbenden Oxiden verunreinigt ist und somit eine gezielte nachträgliche Einfärbung der Masse deutlich verbessert.

Zur Erzeugung des erfindungsgemäßen nichtmetallischen Werkstoffes wird im Gemisch neben Talkum und Bindemitteln auch ein festigkeitssteigender Zusatz notwendig. Hierfür eignet sich vorzugsweise Magnesit und/oder Penninit, die dazu in beliebig variierenden Masseanteilen eingebracht werden.

Ein zwar für die Herstellung des erfindungsgemäßen nichtmetallischen Werkstoffes nicht zwingend notwendiger, aber zur Erzielung der besonderen Vorteile der erfinderischen Lösung wichtiger Zusatz, wird durch färbende Zusätze wie Farbkörper bzw. Farbpigmente und/oder färbende Oxide bzw. Karbonate in beliebig variierenden Masseanteilen bewirkt.

Als besonders vorteilhaft haben sich als Farbkörper handelsübliche thermisch stabile keramische Farbkörper und Farbpigmente herausgestellt.

Bei einer nichtthermischen Behandlung des Werkstoffes werden als Farbpigmente handelsübliche Lichtechtpigmente, wie sie zur Einfärbung von Betonen eingesetzt werden, verwendet.

Als färbende Oxide haben sich besonders Eisenoxidpulver, -granulat und/oder -schlicker sowie Chromoxid, Kobaltoxid, Kupferoxid, Braunstein, Eisenoxid, Titandioxid und/oder Nickeloxid und als färbende Karbonate Kobaltkarbonat und/oder Kupferkarbonat bewährt.

Wesentlich für die erfindungsgemäße Lösung ist, daß die aus dem erfindungsgemäßen Werkstoff hergestellten Platten, Ofenkacheln, Formstücke, Sockel- und Simssteine für Kamin- und Ofenverkleidungen nicht nach dem typischen keramischen Fertigungsverfahren einer herkömmlichen Ofenkachel, welches durch den hohen Anteil an Tonkomponenten bestimmt wird, erzeugt, sondern eine Verfestigung der Rohstoffe durch verschiedene Bindungsarten ohne eine keramische Versinterung der Hauptkomponenten erfolgt. Im Gegensatz dazu werden bei der Fertigung von Ofenkacheln die eingesetzten Rohstoffe durch die Hauptkomponente Ton während des Brandes über 1.000°C keramisch versintert. Die für die erfindungsgemäße Lösung genannten unterschiedlichen Verfestigungsarten werden nach den Patentansprüchen als hydraulische Bindung, chemische Bindung und keramische Bindung bezeichnet.

Die Formgebung des Materials erfolgt mittels Trockenpressen, Heißpressen, isostatischem Pressen, Gießen und/oder Druckgießen. Gegebenenfalls erfolgt anschließend ein thermischer Prozeß, der für den Ausbrand organischer Zusätze und eine Verfestigung sorgt. Dieses thermische Verfahren ist jedoch nur bei bestimmten Bindungsvarianten notwendig.

Durch die verschiedenen Formgebungsverfahren können Platten, Ofenkacheln, Formstücke, Sockel- und Simssteine für Kamin- und Ofenverkleidungen als einbaufertiges Produkt gefertigt werden.

Durch das Einfärben des erfindungsgemäßen Werkstoffes mittels färbender Zusätze, wie Farbkörper oder färbender Oxide bzw. Karbonate kann eine fast unbegrenzte Farbpalette abgedeckt werden. Weiterhin können durch entsprechende Oberflächengestaltungen, wie Druck- und Dekortechnik o. dgl., vielfältige Farbdesigns gestaltet werden.

### Die Erfindung wird an Hand von drei Ausführungsbeispielen näher erläutert:

Bei den nachfolgenden Ausführungsbeispielen wird davon ausgegangen, daß der Talkumrohstoff bereits trocken, feingemahlen und gesichtet vom Rohstofflieferanten bezogen wird. Ansonsten erfolgt die Aufbereitung der Massen nach folgenden Verfahrensschritten. Die grob vorliegenden Rohstoffe werden mittels Brecher, Kollergang bzw. Walzenstuhl vorzerkleinert. Dann wird die Masse eingewogen und in Trommelmühlen naß gemahlen. Der fertige Schlicker läuft dann über ein Sieb und eine Magnetscheidung zur Filterpresse, wo dieser entwässert wird. Danach erfolgt die Feinmahlung hinsichtlich der sich anschließenden technologischen Schritte.
1. Die Trockenmasse, bestehend aus 90 Gew. % Talkum und 10 Gew. % Orthophosphorsäure wird mit Wasser zu einem Schlicker verrührt. Danach wird dieser Schlicker bei 65°C bis zu einer Restfeuchte von unter 1 % getrocknet, mittels eines Brechers oder Kollergangs zerkleinert sowie einer Mühle gemahlen und anschließend in einem Intensivmischer unter evtl. Beigabe von färbenden Zusätzen gemischt. Aus dem entstandenen Korngemisch wird eine trockenpressfähige Kornfraktion herausgesiebt. Die nunmehr gemahlene, getrocknete und gesiebte Substanz wird mittels einer Trockenpresse bei einem Pressdruck von bis zu 30 MPa zu Platten gepresst. Diesem Formgebungsprozeß schließt sich der Brand im Ofen bei Temperaturen bis 900°C an. Als fertiges Produkt erhält man je nach Zugabe von färbenden Verbindungen eine gefärbte Platte, welche nunmehr für den Ofen- und Kaminbau eingesetzt werden kann. Diese Platte weist ähnliche Eigenschaften auf, wie der natürliche Speckstein, der im Ofen- und Kaminbau zum Einsatz kommt.
2. Im Mischer wird aus 64 Gew. % Talkum, in diesem Fall Steatit, die dichte, feinschuppige Varietät des Talkes, 0,8 Gew. % natriumarmes Wasserglas, 2 Gew. % Bariumcarbonat, 30 Gew. % Wasser, 1,5 Gew. % Dispergiermittel (BASF - Sokalan) und 1,7 Gew. % Netzmittel (BASF - Lutensit) ein Gießschlicker hergestellt. Dieser Suspension können dann noch im Bedarfsfall färbende Zusätze hinzugefügt werden. Zum Beispiel käme eine Zugabe von 3 Gew. % Chromfarbkörper in Betracht. Dieser Gießschlicker wird dann intensiv gerührt und anschließend in eine Gipsform, wie sie auch in der Porzellanindustrie verwendet wird, eingegossen und ggf. in weiteren Schritten bis zum Vollguß nachgefüllt. Nach einer abschließenden Standzeit von mehreren Stunden wird der Rohling entformt und bei Temperaturen um 100°C sanft getrocknet. Nach dem Trocknen bis zu einer maximalen Restfeuchte von 1 % erfolgt das Verputzen des Formlings und der anschließende Brand bis 900 °C. Der geformte Werkstoff erreicht auch ohne einen Brennvorgang hohe Endfestigkeiten. Der Brennprozeß dient vor allem dem Ausbrennen von organischen Bestandteilen und einer beschleunigten Verfestigung. Hiernach erhält man in diesem Fall ein dunkelgrün eingefärbtes Formteil bzw. Sockel- oder Simsstück für den Ofen- und Kaminbau.
3. Nach der Herstellung eines Schlickers aus der im Mischer zusammengestellten Trockenmasse (93 % Talkum, 5 Gew. % Wasserglas oder Phosphorsäure sowie 2 Gew. % organisches Plastifizierungsmittel (Zschimmer & Schwarz - Optapix)) und Wasser wird in der Filterpresse ein Filterkuchen gefertigt. Der Talkum-Rohstoff kann färbende Verunreinigungen wie Fe₂O₃ oder MnO enthalten oder es werden färbende Zusätze (Oxide, Karbonate, Farbpigmente und/oder Farbkörper) hinzugefügt. Die mengenmäßige Zugabe von Anmachwasser richtet sich nach den nachfolgenden technologischen Einrichtungen sowie der Gestalt und Größe der zu fertigenden Formlinge. Der Filterkuchen wird über einen Doppelwellenmischer einer Vakuumstrangpresse zugeführt, wo dieser steifplastisch zu Formstücken, Platten bzw. Steinen oder Hubeln verarbeitet wird. Falls Hubel gezogen werden, so können diese entweder zum Drehen, Eindrehen in Gipsformen bzw. zur Modellierung weiterverwendet werden oder im lederharten Zustand durch spanabhebende Bearbeitung ihre gestalterische Endform erfahren. Nach dem Trocknen erfolgt der Brand bei 400 - 900 °C, wobei auch hier ohne diese thermischen Behandlung hohe Festigkeiten erzielt werden können. Die Brenntemperatur ist abhängig von der gewünschten Einfärbung durch die enthaltenen färbenden Oxide bzw. Karbonate.

## Patentansprüche

1. Nichtmetallischer Werkstoff mit hoher Wärmespeicherfähigkeit für Platten, Ofenkacheln, Formstücke, Sockel- und Simssteine für Kamin- und Ofenverkleidungen, **dadurch gekennzeichnet, daß** der nichtmetallischer Werkstoff aus einem Gemisch von über 50 Gew.% Talkum, Bindemittel sowie wahlweise färbende und/oder festigkeitssteigernde Zusätze enthält.

2. Nichtmetallischer Werkstoff mit hoher Wärmespeicherfähigkeit nach Anspruch 1, **dadurch gekennzeichnet, daß** als Bindemittel Substanzen in beliebig variierenden Masseanteilen zur Erzielung von organisch-chemischen, anorganisch-chemischen Bindungen, hydraulischen Bindungen und/oder keramischen Versinterungen eingesetzt werden.

3. Nichtmetallischer Werkstoff mit hoher Wärmespeicherfähigkeit nach Anspruch 2, **dadurch gekennzeichnet, daß** die organisch-chemischen Bindungen durch Zusätze von organischen Bindern, wie Kunstharzen, Zellulosederivaten, Sulfitablaugen und/oder Alginaten erzielt werden.

4. Nichtmetallischer Werkstoff mit hoher Wärmespeicherfähigkeit nach Anspruch 2, **dadurch gekennzeichnet, daß** die anorganisch-chemischen Bindungen durch Zusätze von anorganischen Bindern, wie Phosphorsäure, Aluminiumphosphat, Alkaliphosphat und/oder Wasserglas erzielt werden.

5. Nichtmetallischer Werkstoff mit hoher Wärmespeicherfähigkeit nach Anspruch 2, **dadurch gekennzeichnet, daß** hydraulische Bindungen mittels Zementen, wie Zemente und Spezialzemente vom Portlandtyp, Eisenportlandzement, Hochofenzement sowie Tonerdezement und/oder Puzzolanoder Traßzement erfolgen.

6. Nichtmetallischer Werkstoff mit hoher Wärmespeicherfähigkeit nach Anspruch 2, **dadurch gekennzeichnet, daß** eine keramische Versinterung mittels plastischer Rohstoffe, wie Kaolin, in Verbindung mit Flußmitteln, wie Feldspat, insbesondere Natron- und Kalifeldspat, Nephelinsyenit und/oder Oxiden der Alkali- und Erdalkaligruppe sowie Eisen-, Zink- Kupfer-, Borund/oder Kobaltoxid erfolgt.

7. Nichtmetallischer Werkstoff mit hoher Wärmespeicherfähigkeit nach Anspruch 1, **dadurch gekennzeichnet, daß** als festigkeitssteigernde Zusätze Magnesit und/oder Penninit in beliebig variierenden Masseanteilen verwendet werden.

8. Nichtmetallischer Werkstoff mit hoher Wärmespeicherfähigkeit nach Anspruch 1, **dadurch gekennzeichnet, daß** als färbende Zusätze Farbkörper bzw. Farbpigmente und/oder färbende Oxiden bzw. Karbonaten in beliebig variierenden Masseanteilen verwendet werden.

9. Nichtmetallischer Werkstoff mit hoher Wärmespeicherfähigkeit nach Anspruch 8, **dadurch gekennzeichnet, daß** als Farbkörper, handelsübliche, thermisch stabile keramische Farbkörper und Farbpigmente verwendet werden.

10. Nichtmetallischer Werkstoff mit hoher Wärmespeicherfähigkeit nach Anspruch 8, **dadurch gekennzeichnet, daß** als Farbpigmente für eine nichtthermische Behandlung des Werkstoffes handelsübliche Lichtechtpigmente zur Einfärbung von Betonen eingesetzt werden.

11. Nichtmetallischer Werkstoff mit hoher Wärmespeicherfähigkeit nach Anspruch 8, **dadurch gekennzeichnet, daß** als färbende Oxide Eisenoxidpulver, -granulat und/oder -schlicker sowie Chromoxid, Kobaltoxid, Kupferoxid, Braunstein, Eisenoxid, Titandioxid und/oder Nickeloxid verwendet werden.

12. Nichtmetallischer Werkstoff mit hoher Wärmespeicherfähigkeit nach Anspruch 8, **dadurch gekennzeichnet, daß** als färbende Karbonate Kobaltkarbonat und/oder Kupferkarbonat verwendet werden.
